# EUROPEAN PATENT APPLICATION

(11) **EP 1 672 570 A1**
(43) Date of publication of application: **21.06.2006**
(21) Application number: 04029964.6
(22) Date of filing: 17.12.2004
(51) Int. Cl.: G06Q 10/00

(54) **A data processing system and method of collaborative entry of a set of data**

(71) Applicant: SAP AG, 69190 Walldorf (DE); unycom Information Technology Services GmbH, 8042 Graz (AT)
(72) Inventor: Hagedorn, Harald, 69190 Walldorf (DE)
(74) Representative: Richardt, Markus Albert

(57) **Abstract**

The invention relates to a data processing system comprising
- a web portal (102, 130), the web portal being adapted to receive an initiator's entry of a set of data, the set of data comprising at least one identifier of at least one co-initiator,
- means (102, 130) for sending a message to the at least one co-initiator using the respective identifier in response to the entry of the set of data,
- a database (136, 110, 112) for storing the set of data, the database being adapted to receive an approval to the set of data from the at least on co-initiator,
- an application program (114) for viewing and / or processing the set of data,
wherein the database is adapted to enable access to the set of data by the application program after the approval has been received by the database from all co-initiators identified in the set of data.

## Description

### Field of the invention.

The present invention relates to the field of data processing, and more particularly to data entry, such as for the online submission of an invention disclosure or another electronic document.

### Background and prior art

Today's workflow processing tools are based on the paradigm of a single initiator. Typically an initiator enters data descriptive of a certain event, a suggested appointment or the like; in response to the data entry workflow processing starts in accordance with a pre-defined or adaptive workflow scheme.

US Patent 5,706,452 shows an apparatus for structuring and managing the participatory evaluation of documents by a plurality of reviewers. The method uses a feed-forward synchronisation scheme defined as a workflow graph construct. The workflow graph construct allows to define document evaluation strategies that take advantage of the inherent parallelism within a business process and take into account the data dependencies exhibited by the business process. For example, the document evaluation is performed for an investment proposal in accordance with the workflow graph.

US Patent Application 20030187706A1 shows an innovation engine portal method and system. The innovation engine portal comprises an idea workflow tool for innovators entry of their ideas.

The present invention aims to provide an improved data processing system that facilitates the collaborative entry of a set of data, such as the electronic submission of an invention disclosure by a team of inventors.

### summary of the invention

In accordance with the present invention there is provided a data processing system comprising a web portal, the web portal being adapted to receive an initiator's entry of a set of data. The set of data comprises at least one identifier of at least one co-initiator. A message is sent to the at least one co-initiator using the respective identifier in response to the entry of the set of data. The set of data is stored in a database. The database is adapted to receive an approval to the set of data from the at least on co-initiator. After all co-initiators have entered their respective approvals to the set of data, access to the set of data from an application program is enabled by the database.

The present invention is particularly advantageous as collaborative entry of a set of data by an initiator and at least one co-initiator is facilitated. Only after all co-initiators have entered their respective approvals to the set of data entered by the initiator further processing of the set of data by an application program is enabled.

In accordance with an embodiment of the invention the web portal is adapted to receive a draft of the set of data. The draft set of data and status data indicative of the draft status is stored in the database. At a later point of time the initiator can enter completion data for completion of the draft set of data into the web portal. In response to entry of the completion data the status is updated to indicate the completion status. The message to the at least one co-initiator is only sent after the completion status has been reached. Preferably, the draft set of data is only accessible to the initiator but not to the co-initiators or to anybody else in the company's organisation as long as the set of data that has been entered by the initiator has the draft status.

In accordance with an embodiment of the invention the co-initiators can enter their approval or disapproval to the completed set of data. After approval of the set of data by all co-initiators, the status is updated to indicate an approval status. The approval status enables access to the set of data by an application program for viewing of the set of data and / or further processing.

If at least one of the co-initiators has entered his or her disapproval to the set of data, the status is re-set to the draft status. This enables the initiator to amend the set of data in order to make another attempt to get the co-initiator's approvals. In response to entry of the amendment of the set of data, the status is changed from draft to completion status. This again causes a notification of the co-initiators. This process can go through several iterations until all co-initiators have entered their respective approvals.

In accordance with an embodiment of the invention the initiator uploads at least one data file to the web portal. A pointer to the data file is stored in the database for later retrieval of the at least one data file. For example, the data file includes a presentation, technical drawing or other information for explanation of the initiator's idea, suggestion, or invention.

In accordance with an embodiment of the invention the web portal can generate a printable format of the set of data. For example, the initiator can print out the set of data for signature by himself and all co-initiators. The hard copy is submitted to an organisational entity that is responsible for the processing of the sets of data received via the web portal in electronic version.

In accordance with an embodiment of the present invention the web portal provides a plurality of data entry fields for entry of the set of data. At least some of the data entry fields have associated tool tips that provide explanations of what is to be entered.

In accordance with an embodiment of the invention the application program that is used for further processing of the set of data is a patent administration tool. For example, a new invention disclosure that has been entered collaboratively and that has an approval status is accessed by means of the patent administration tool for further processing. For example, the patent administration tool implements a workflow for reviewing invention disclosures and selecting invention disclosures for first filing, secondary filing and / or making patent application and / or patent maintenance decisions.

In another aspect the present invention relates to a business method for capturing intellectual property rights. An invention disclosure can by entered by a lead inventor into a company's inventor portal. The lead inventor indicates at least one co-inventor in the online submission. Preferably, the co-inventors are identified by their respective email addresses. This facilitates online review of the invention disclosure by the co-inventors. Approval of the invention disclosure by all co-inventors initiates a workflow for the further processing of the invention disclosure by means of an application program.

The present invention is particularly advantageous as it facilitates the collaborative submission of an invention disclosure from a team of inventors. This provides an incentive to a company's inventors to submit their new inventions to the company's patent department which is a prerequisite to enable the company to protect its intellectual property rights to such inventions.

Further, the present invention is particularly advantageous as it reduces the administrative expense for the processing of invention disclosures. This is due to the fact that each invention disclosure that is submitted to the company's intellectual property department has already gone through an approval process that does not require the company's intellectual property department's involvement.

In another aspect the present invention is particularily advantageous as it facilitates the collaborative entry of a set of data, e.g. an invention disclosure, by an international team that can be distributed over several geographical areas and across several time zones.

### Brief description of the drawings

In the following preferred embodiments of the invention will be described in greater detail by making reference to the drawings in which:
- Figure 1: Is a block diagram of an embodiment of a data processing system of the invention,

- Figure 2: Is a flowchart illustrating a preferred embodiment of a method of the invention,
- Figures 3 - 9: Show a sequence of windows generated by an inventor portal for entry of an invention disclosure,
- Figure 10: Shows a window of a patent administration tool for accessing an invention disclosure that has been entered using the inventor's portal.

### Detailed Description

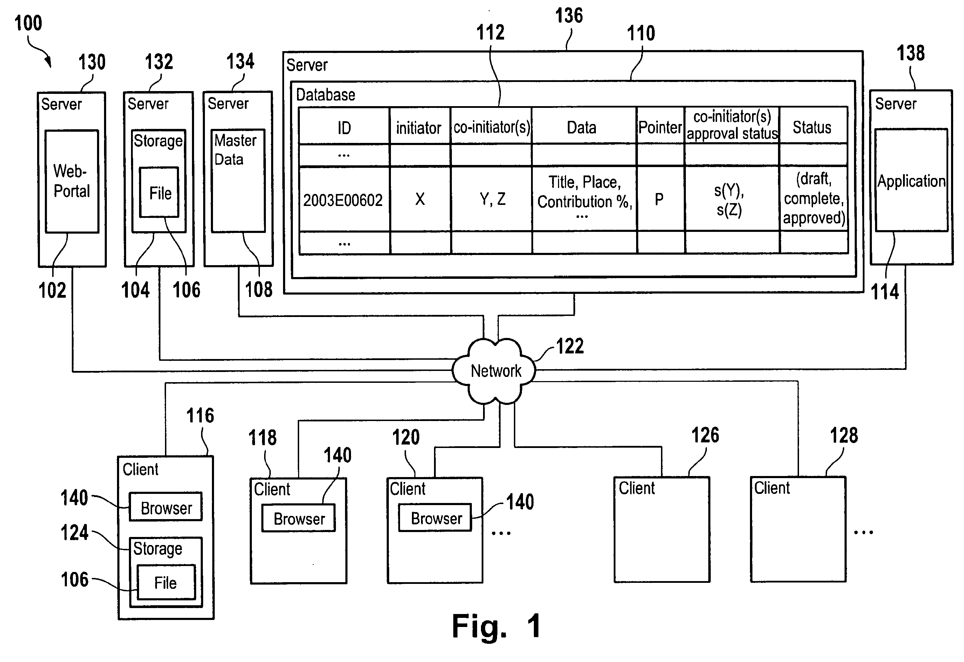

Figure 1 shows a data processing system 100 for collaborative entry of a set of data. The data processing system 100 has a web portal 102 for the entry of a set of data. Further, the data processing system 100 has the storage 104 for storing a file 106 that belongs to the set of data. Master data is stored in a storage 108. The master data can encompass user names, user authentication information, such as user authentication certificates, user log-in names and passwords, user email addresses and / or other user related information. Alternatively authentication certificates are used for the user log-in. The authentication certificates are held by the operating system or the browser program.

A database 110 is used for storing the sets of data that are entered via the web portal 102. The database 110 has at least one database table 112. The database table 112 comprises a column 'ID' for storing an identifier of a set of data, a column 'initiator' for storing an identifier of an initiator, a column 'co-initiator(s)' for storing identifiers of co-initiators, if any, a column 'data' for storing the user data of the set of data, a column 'pointer' for storing a pointer pointing to the storage location of the file 106 belonging to the set of data, if any, a column 'co-initiator(s) approval status' for storing the approval statuses of the co-initiators, if any, and a column 'status' for storing the status information assigned to the set of data. The file 106 can be stored as a temporary file on a temporary storage location. At a later point of time, e.g. when the status of the set of data becomes "approved" or when the file 106 is accessed from the application program 114, the file is copied into a document management system used by the application program.

For example, the data processing system 100 is used for entry of invention disclosures. In this case the column 'data' can contain a title of the invention disclosure, an indication of the place of invention, the contribution percentages of the initiator and the co-initiators, if any, and / or other data related to the invention itself, circumstances of the making of the invention and/or administrative information.

An application program 114 can access the set of data stored in the database table 112 depending on the status of a given set of data. In the preferred embodiment considered here the application 114 can only read a set of data that is stored in the database table 112 when the status of the set of data is 'approved'.

A number of client computers 116, 118, 120, ... can be coupled to the web portal 102 via network 122 by means of browser programs 140. For example, the network 122 is a company's intranet, an extranet or the Internet. The client computer 116 belongs to a user X who takes the role of the initiator, and the client computers 118 and 120 belong to the users Y and Z, respectively, who take the roles of co-initiators in the example considered here.

The client computer 116 has storage 124 for storing the file 106.

The client computers 126, 128, ... can be coupled to the application program 114 via the network 122 for viewing and / or processing of sets of data stored in the database table 112. For example, the client computers 126, 128,... belong to an organisational entity of the company that has the task of processing sets of data that have been collaboratively entered into the database table 112 by the initiator and his or her co-initiators, if any.

In the embodiment considered in figure 1 the web portal 102 is provided by a server computer 130, the storage 104 by a server computer 132, the storage 108 by a server computer 134, the database 110 by a server computer 136 and the application program 114 is executed by a server computer 138. It is to be noted that the web portal 102, the storage 104, the master data 108, the database 110 and execution of the application program 114 can be implemented on a single server computer or by means of other centralised or distributed data processing resources.

In operation the user X connects to the web portal 102 using his or her client computer 116. Identification and authentication information is transmitted from user's X client computer 116 to the web portal 102 for identification and authentication of the user X.

The web portal 102 provides a plurality of data entry fields for user's X entry of the set of data. In addition the user X can upload the file 106 stored on his or her client computer 116 to the web portal 102 which stores the file 106 in the storage 104.

In response to the users X entry of the set of data a new row is created in the database table 112. The new row contains an identifier (ID) of the new set of data which is 2003E00602 in the example considered here. Further, an identifier of the user X who has taken the role of an initiator is entered into the database table 112. If the initiator X has entered identifiers of his or her co-initiators these identifiers are also stored in the new row of the database table 112. Preferably, the initiator and the co-initiators are identified by their respective email addresses.

User data that has been entered by the initiator X is also entered into the new row of the database table 112 as well as a pointer P that points to the storage location of the storage 104 where the file 106 is stored. The co-initiators approval statuses s(Y) and s(Z) are initially set to -1 when the new row in the database table 112 is created. An approval status of -1 indicates that no approval or disapproval has been entered by the respective co-initiator. An approval status of 0 indicates disapproval and an approval status of 1 indicates approval of the respective co-initiator. The status of the new row that has been created in the database table 112 for the set of data can be 'draft' ' complete' or 'approved'.

Whether the set of data has the status 'draft' or 'complete' is entered by the initiator X into the web portal 102 when he or she enters the set of data. For example, if the initiator X has to interrupt entry of the set of data he or she can save the set of data as a draft version on the web portal 102. At a later point of time the initiator X can resume the entry of the set of data for completion of the data entry. After completion of the data entry the initiator X can save the entered set of data as a complete set of data. Thus the status of the set of data is updated from draft to complete in the database table 112. Preferably, the set of data is private to the initiator X as long as the set of data has the status 'draft', i.e. only the initiator has access rights to the draft set of data. When the set of data has the status 'complete' the set of data becomes accessible to the co-initiators Y, Z that are identified by the initiator X when he or she entered the set of data.

Preferably the web portal 102 generates email messages to the co-initiators using the email addresses entered by the initiator. In the example considered here the co-initiators Y and Z receive email messages. The email messages to the co-initiators contain a link, such as a uniform resource locator (URL), that enables access to the set of data that has been previously entered by the initiator X.

In response to clicking on the URL an output is generated by the web portal 102 that visualises the set of data that has been entered by the initiator X. Next, the co-initiator can enter his or her approval or disapproval of the set of data. For example, if co-initiator Y enters his or her approval the co-initiator approval status s (Y) is set to be logically 1; if the co-initiator Z enters his or her disapproval the respective co-initiator approval status s (Z) is set to logically zero. If all co-initiator approval statuses are logically 1 the status is updated to 'approved'. This enables access to the respective set of data by the application program 114 via the network 122.

When one of the co-initiators enters his or her disapproval the status is reset from 'complete' to 'draft'. Preferably, an automatic email message is generated and sent to the initiator X in order to inform the initiator X of the resetting of the status from 'complete' to 'draft'. In response the initiator X can review the previously entered set of data in order to modify and / or amend the set of data. Saving of the set of data as 'complete' re-starts the approval procedure.

If one of the co-initiators does not respond to the email notification regarding the initiators X entry of the set of data, this co-initiator's approval is deemed to be given after a certain pre-defined time from the sending of the email message has passed. For example, if co-initiator Z has not entered his approval or disapproval within one week from receipt of the email notification, his or her co-initiator approval status s(Z) is automatically changed from -1 to logically 1.The time interval for the co-initiator's approval or disapproval can be configured in the database 110.

It is important to note that the data processing system 100 provides various degrees of privacy of the set of data that has been entered by the initiator X. As long as the set of data has the status 'draft' the set of data is only accessible by the initiator X. When the status changes from 'draft' to 'complete' the set of data becomes also accessible to the co-initiators Y and Z indicated by the initiator X, but not to anybody else in the organization. When the status is 'complete' neither the initiator X nor the co-initiators Y, Z can change the set of data that has been previously entered by the initiator X. Rather the co-initiators Y and Z can enter their respective approval or disapproval to the set of data. After approval of the set of data by all co-initiators the status is changed to 'approved'. This enables access to the set of data by means of the application program 114.

If however at least one of the co-initiators Y, Z has entered his or her disapproval, the status is re-set from 'complete' to 'draft'. This means that the set of data becomes private to the initiator X again and that initiator X can modify the set of data. For example, in response to the email notification regarding disapproval by one of the co-initiators, the initiator X corrects, modifies or amends the draft and stores the resultant set of data as 'complete'. This restarts another approval iteration.

For example, the application program 114 has workflow processing functionality. Processing of the workflow is stated in response to all co-initiators approvals of the set of data.

The preferred embodiment considered here is particularly useful for implementing the electronic filing of invention disclosures. In this case the user data that is entered by the initiator X contains data that describes the invention and/or circumstances that are related to the invention. After approval by the co-initiators, i.e. the co-inventors, the electronic invention disclosure becomes accessible to the application program 114 for further processing. For example, the application program 114 is a patent administration tool for processing of invention disclosures before filing and the administration and management of patent applications and patents.

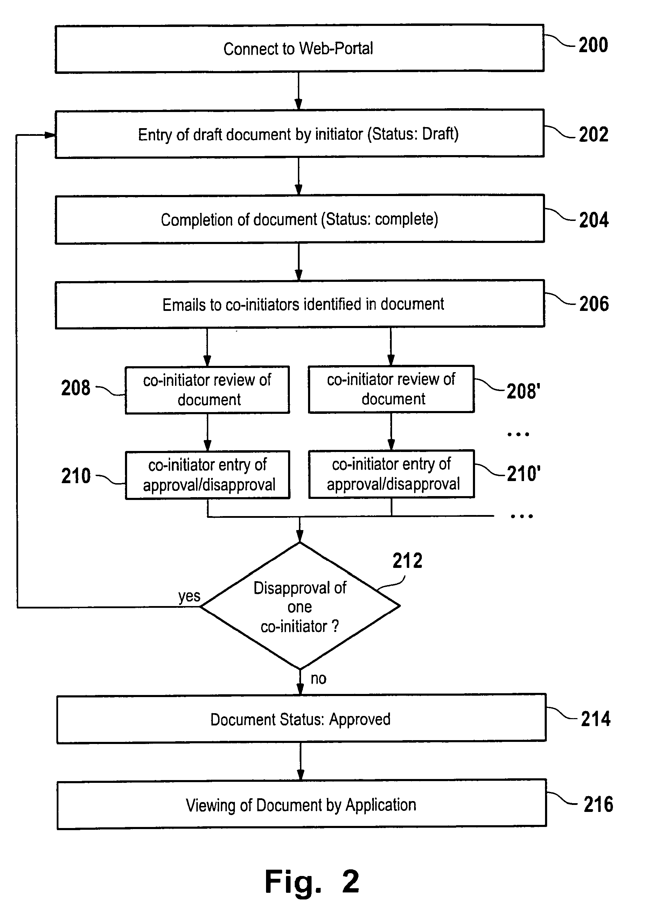

Figure 2 shows a corresponding flow chart. In step 200 the initiator X connects to the web portal. In step 202 the initiator enters a draft set of data, such as a draft document into the web-portal. The draft document is saved with a status 'draft'. The initiator X may disconnect from the web portal and re-connect to the web portal at a later point of time. In step 204 the initiator X completes the data entry such that the status of the document is updated from 'draft' to 'complete'.

In step 206 emails to the co-initiators identified in the document are generated automatically and sent to the co-initiators. In this way the co-initiators are invited to review the document and to enter their respective approval or disapproval. For example, the co-initiator Y reviews the document in step 208. In step 210 the co-initiator Y enters his or her approval or disapproval of the document. Analogous steps 208' and 210' are performed by the co-initiator Z and other co-initiators, if any.

If one of the co-initiators does not enter his or her approval or disapproval within a certain time limit from the sending of the email in step 206, the absence of a response is considered the co-initiator's approval or disapproval, depending on the implementation.

In step 212 it is determined weather at least one of the co-initiators has disapproved the document. If this is the case the control goes back to step 202 and the status of the document is re-set to 'draft'. If the contrary is true the control goes to step 214 where the status of the document is changed to 'approved' . This enables access to the document by the application program in step 216 for viewing and / or further processing.

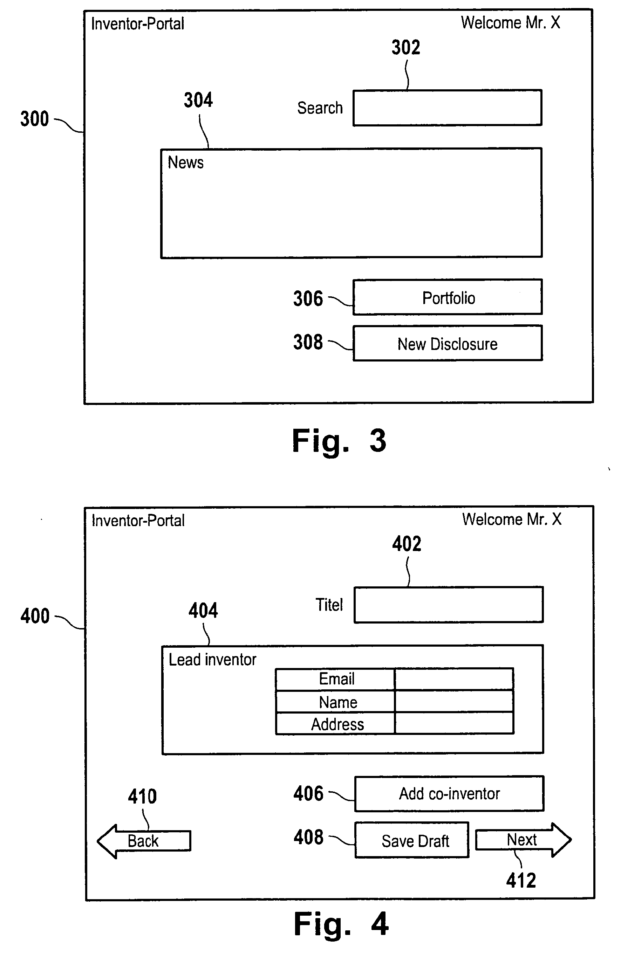

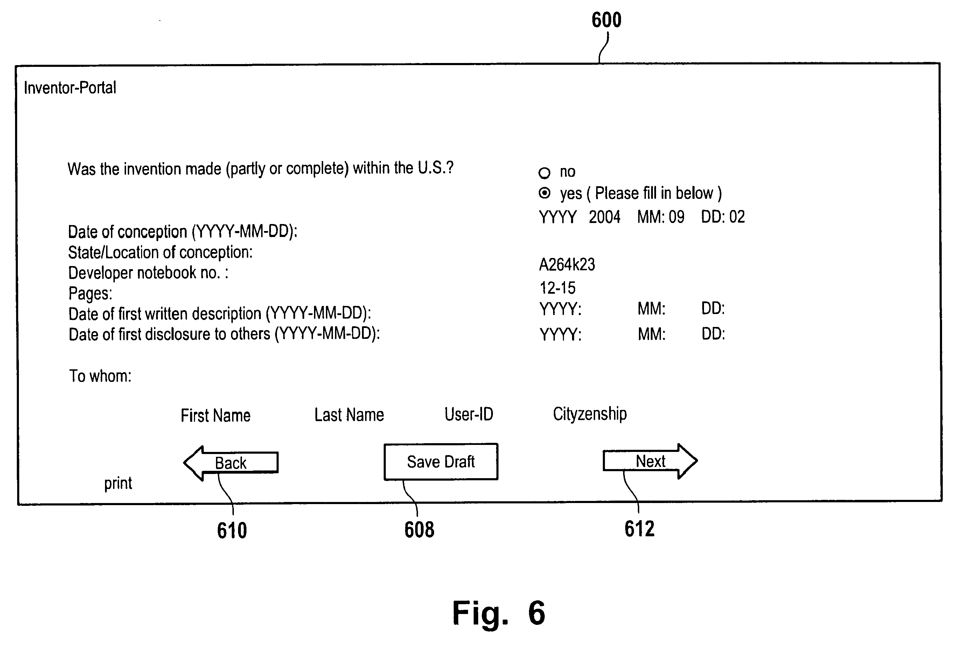

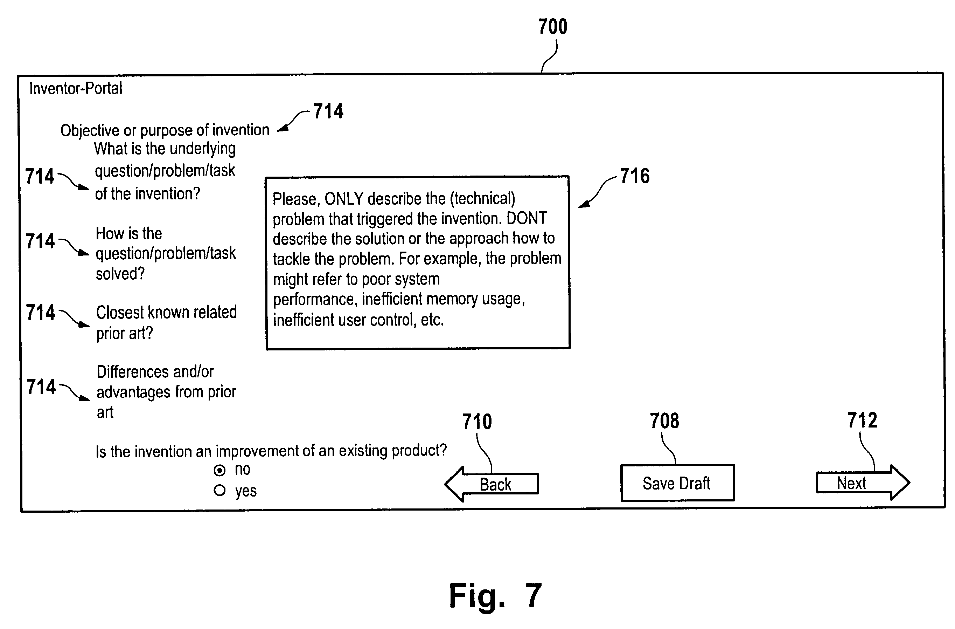

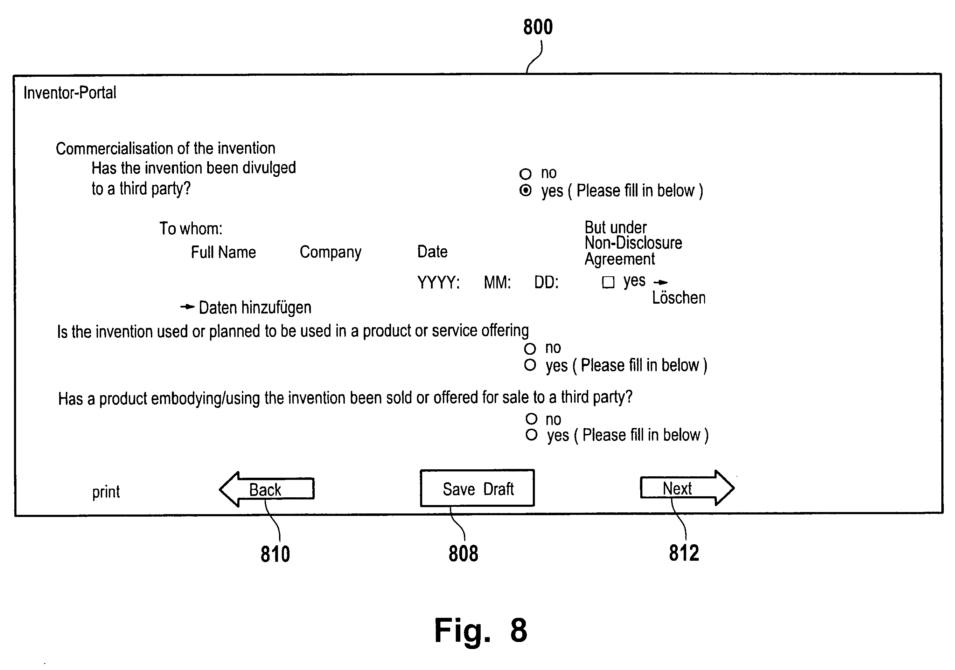

The following figures 3 to 9 illustrate an implementation of a user interface provided by the web portal 102 (cf. figure 1). In the preferred embodiment considered here the web portal 102 provides a wizard functionality for entering a new invention disclosure.

When the initiator X, i.e. the lead inventor X, connects to the inventor portal provided by the web portal 102 the window 300 as depicted in figure 3 is displayed on the monitor of the client computer 116 of the lead inventor X. The window 300 has a data entry field 302, a display field 304, a virtual button 306 and a virtual button 308.

The data entry field 302 provides a search functionality. By entering an ID of a previously entered invention disclosure, the lead inventor X can access the invention disclosure for viewing the invention disclosure and / or modifying, correcting, amending or completing the invention disclosure.

The display field 304 serves for display of various messages. For example a notification regarding a newly entered invention disclosure where the inventor X is designated as a co-inventor by one of this peers can be displayed in the display field 304.

By clicking on the virtual button 306 the inventor X can access his or her portfolio of previously entered invention disclosures, patent applications, and patents, if any. For entry of a new invention disclosure the inventor X clicks on the button 308.

Figure 4 shows a window 400 that is generated after the button 308 has been selected. The window 400 has a data entry field 402 for entry of a tile of the invention disclosure. Further, the window 400 has a data entry field 404 for entry of the lead inventor's personal data, such as his name, address and email address. Preferably this lead invention personal data does not need to be entered manually as it is already know from the user login..

For adding a co-inventor the lead inventor X clicks on the virtual button 406. For saving the data of the invention disclosure as a draft the lead inventor X clicks on the button 408. For navigating along the sequence of windows provided by the wizard functionality of the inventor portal the lead inventor X can click on the back button 410 or on the next button 412 for going back for going backwards or forwards in the sequence of windows.

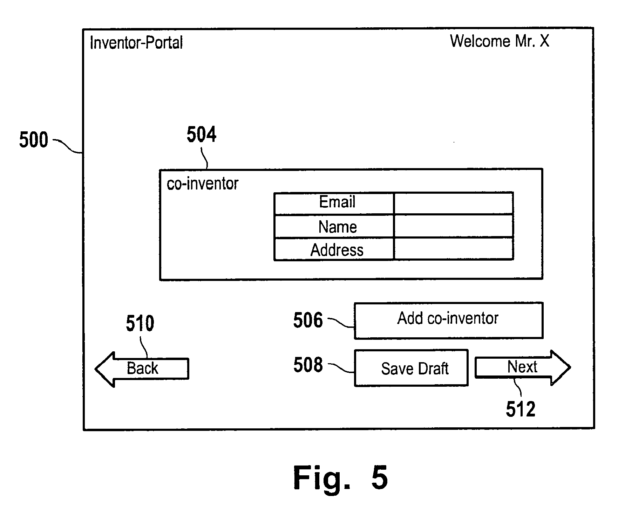

Figure 5 shows a window 500 that is generated in response to clicking the add co-inventor button 406 of the window 400. Elements of the window 500 that correspond to elements of the window 400 are designated by like reference numerals . Again, entry of the co-inventor personal data does not require manual entry of all the data. Preferably, entry of the co-inventor's email address is sufficient. A co-inventor's email address can be used as a key in order to retrieve the co-inventor's personal data from the master data.

After all co-inventors have been entered the lead inventor X clicks on the next button. In response the window 600 is generated for entry of additional data related to the circumstances of the making of the invention. This includes data entry fields for entry whether the invention was made within the United States, the conception date, the state / location of conception, the developer's notebook number, the developer's notebook pages, the date of first written description, the date of first disclosure to others within the company and to whom the disclosure has been provided. Again back-, next-, and save draft buttons 610, 612 and 608 are included in the window 600 analogous to the windows 400 and 500 of figures 4 and 5, respectively.

In response to clicking on the button 612 the window 700 is generated. The window 700 has various data entry fields for entry of data descriptive of the object or purpose of the invention, in particular the underlying question / problem / task of the invention, the solution of the question / problem / task, the closest known related prior art and differences and / or advantages over the prior art. Further, a data entry field is provided for entry whether the invention is an improvement of an existing product of the company or not. By moving the mouse pointer onto an information symbol 714 that is displayed next to one of the data entry fields a tool tip for explanation of the respective data to be entered can be accessed, such as the tool tip 716 that explains which data that is to be entered into the respective data entry field.

In response to clicking on the next button 712 the window 800 is generated for entry of additional data related to the invention. The window 800 has data entry fields for entry whether the invention has been divulged for a third party, and if so, to whom. Further, the window 800 has a data entry field for entry whether the invention is used or planned to be used by the company in a product or service offering. Further, the window 800 has a data entry field for entry whether the product embodying or using the invention has been sold or offered for sale to a third party.

In response to clicking on the next button 812 the window 900 is generated. The window 900 can be used for uploading one or more data files that contain a description of the invention. For that purpose the window 900 has a data entry field that enables to indicate a path to a document that contains a detailed description and a path to drawings and / or other documents. The document or the documents that are identified by the one or more paths that are entered into the window 900 are uploaded from the inventors X client computer to the web portal.

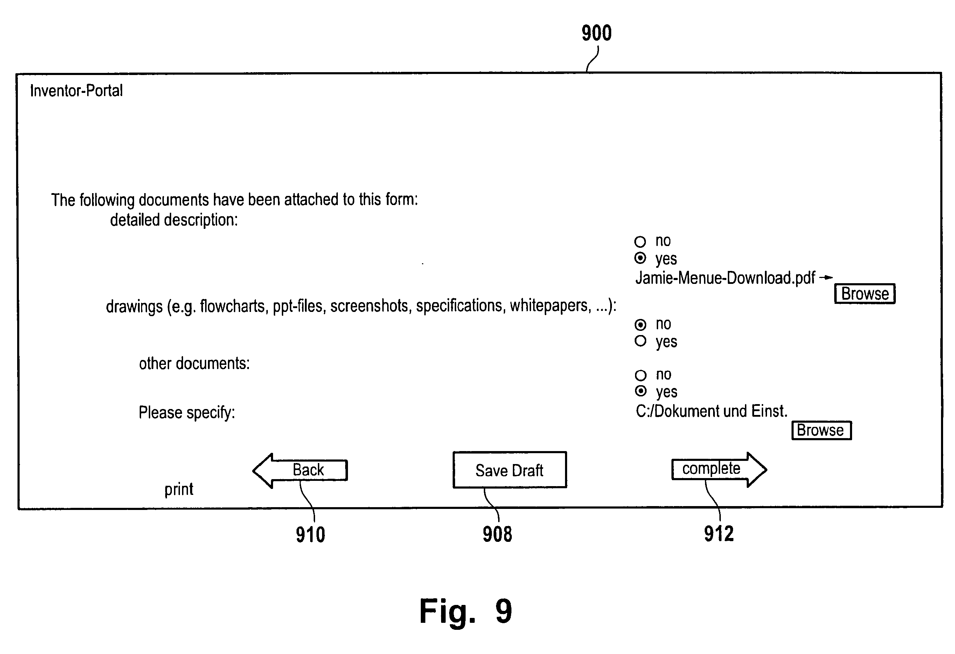

All the data that has been entered in the windows 300 to 900 (cf. figures 3 to 9) is stored as a new row of the database 110 (cf. figure 1) and if one or more files have been uploaded (cf. window 900 of figure 9) those files are stored in storage 104 (cf. figure 1). The status of the invention disclosure is changed from 'draft' to 'complete' in response to clicking on the complete button 912.

In response to the status change from 'draft' to 'complete' automatic notifications are generated and sent to the co-inventors in order to facilitate the co-inventors review and approval or disapproval of the invention disclosure that has been initiated by the lead inventor X. This can be performed analogous to the steps 206 to 216 as shown in figure 2.

After all co-inventors have approved the invention disclosure the status is changed from 'complete' to 'approved'. This enables access to the invention disclosure from the application program e.g. a patent administration tool.

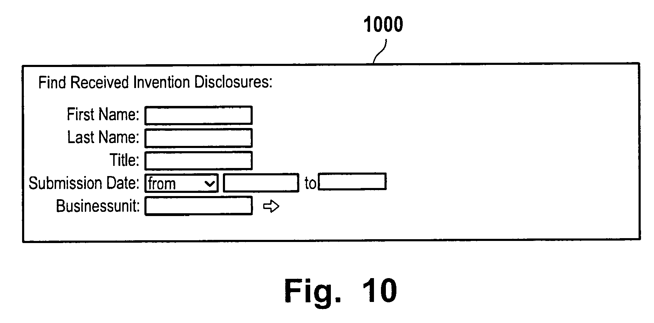

Figure 10 shows a window 1000 that is generated by the application program. The window 1000 includes a file tree that for access to new invention disclosures that have an 'approved' status. Alternatively a search profile can be entered for searching new invention disclosures, such as by entry of an inventor's first name, last name, title, the invention disclosures submission date and / or the business unit from which the invention disclosure originates.

After retrieval of the invention disclosure, the invention disclosure can be opened for viewing the invention disclosure, and / or for manually, semiautomatically or automatically starting a workflow for further processing of the invention disclosure, such as sending the invention disclosure to one or more reviewers.

If the invention disclosure has an associated file (e.g. file 106 of Fig. 1), the file is copied into a document management system used by the application program.

### List of Reference Numerals

- 100: data processing system
- 102: web portal
- 104: storage
- 106: file
- 108: storage
- 110: database
- 112: database table
- 114: application program
- 116: client computer
- 118: client computer
- 120: client computer
- 122: network
- 124: storage
- 126: client computer
- 128: client computer
- 130: server computer
- 132: server computer
- 134: server computer
- 136: server computer
- 138: server computer
- 140: browser program
- 300: window
- 302: data entry field
- 304: display field
- 306: button
- 308: button
- 400: window
- 402: data entry field

- 404: data entry field
- 406: button
- 408: button
- 410: button
- 412: button
- 500: window
- 504: data entry field
- 506: button
- 508: button
- 510: button
- 512: button
- 600: window
- 608: button
- 610: button
- 612: button
- 700: window
- 708: button
- 710: button
- 712: button
- 714: information symbol
- 716: tool tip
- 800: window
- 808: button
- 810: button
- 812: button
- 900: window
- 908: button
- 910: button
- 912: button
- 1000: window

## Claims

1. A data processing system comprising
- a web portal (102, 130), the web portal being adapted to receive an initiator's entry of a set of data, the set of data comprising at least one identifier of at least one co-initiator,
- means (102, 130) for sending a message to the at least one co-initiator using the respective identifier in response to the entry of the set of data,
- a database (136, 110, 112) for storing the set of data, the database being adapted to receive an approval to the set of data from the at least on co-initiator,
- an application program (114) for viewing and / or processing the set of data,
wherein the database is adapted to enable access to the set of data by the application program after the approval has been received by the database from all co-initiators identified in the set of data.

2. The data processing system of claim 1, the web portal being adapted to receive a draft of the set of data, the database being adapted to store the draft and status data being indicative of the draft status, the web portal further being adapted to receive completion data for completion of the draft, wherein in response to receipt of the completion data the status data is updated to indicate a completion status, and wherein the means for sending being adapted to send the message only after the status data indicates the completion status.

3. The data processing system of claim 1 or 2, the initiator having a client computer (116) for coupling to the web portal, the client computer having storage means (124) for storing a file (106), the client computer being adapted for uploading the file to the web portal.

4. The data processing system of claim 3, the database being adapted for storing a pointer to the file as part of the set of data.

5. The data processing system of any one of the preceding claims, the identifier being an email address of the co-initiator.

6. The data processing system of any one of the preceding claims, the message being an email message containing a link for the respective co-initiator's access to the set of data.

7. The data processing system of claim 6, the link being a uniform resource locator.

8. The data processing system of any one of the preceding claims,
wherein the database is adapted to reset the status data from completion to draft in response to receipt of at least one disapproval from one of the co-initiators.

9. The data processing system of any one of the preceding claims, the database being adapted to update the status data in response to receipt of an approval from all the co-initiators in order to indicate the approval status, the approval status initiating workflow processing by the application program.

10. The data processing system of any one of the preceding claims, the web portal being adapted to generate a printable format of the set of data.

11. The data processing system of any one of the preceding claims, the web portal providing a plurality of data entry fields for the initiator's entry of the set of data, at least a sub-set of the data entry fields having tool tips.

12. The data processing system of any one of the preceding claims, the set of data constituting an invention disclosure.

13. The data processing system of any one of the preceding claims, the application program being a patent administration tool.

14. The data processing system of claim 13, the patent administration tool having a workflow processing functionality for processing the set of data.

15. The data processing system of any one of the preceding claims comprising one or more server computers (130, 132, 134, 136, 138).

16. The data processing system of any one of the preceding claims comprising a plurality of client computers (116, 118, 120,...) for entry of the set of data.

17. A method of collaborative entry of a set of data comprising:
- receiving a set of data entered by an initiator, the set of data comprising at least one identifier of at least one co-initiator,
- sending a message to the at least one co-initiator using the respective identifier in response to the entry of the set of data,
- storing the set of data in a database (110, 112, 136),
- receiving an approval to the set of data from the at least on co-initiator,
- enabling access to the set of data by an application program (114) after the approval has been received from all co-initiators identified in the set of data.

18. The method of claim 17, further comprising receiving a draft of the set of data, storing status data in the database being indicative of the draft status, entering completion data for completion of the draft, updating the status data to indicate the completion status, wherein the step of sending a message to the at least on co-initiator is performed when the status data indicates the completion status.

19. The method of claim 17 or 18, further comprising uploading a file (106) to the web portal by the initiator.

20. The method of claim 19, further comprising receiving a disapproval from at least one of the co-initiators, and re-setting the status data from completion to draft status in response to the receipt of the at least one disapproval, wherein the set of data is private to the initiator as long as it has the draft status and the set of data is private to the initiator and the co-initiators as long as it has the complete status, and wherein the initiator has read and write access right in the draft status and the initiator and the co-initiators have read only access rights in the complete status.

21. The method of any one of the preceding claims 17 to 20, further comprising generating a printable format of the set of data, printing the printable format, signature of the resultant print-out, and submission of the print-out to an organisational entity.

22. The method of claim 21, the organisational entity being an intellectual property department using the application program as a patent administration tool.

23. A computer program product, in particular a digital storage medium, comprising computer executable instructions for performing the steps of:
- receiving an initiator's entry of a set of data, the set of data comprising at least one identifier of at least one co-initiator,
- sending a message to the at least on co-initiator using the respective identifier in response to the entry of the set of data,
- storing the set of data in a database (110, 112, 136),
- receiving an approval of the at least one co-initiator,
- enabling access to the set of data by an application program (114) after the approval has been received from all the co-initiators identified in the set of data.

24. The computer program product of claim 23, the instructions being adapted for entering a draft of the set of data, storing status data in the database being indicative of the draft status, entering completion data for completion of the draft, updating the status data to indicate the completion status, wherein the step of sending a message to the at least on co-initiator is performed when the status data indicates the completion status.

25. The computer program product of claim 23 or 24, the instructions being adapted for uploading a file (106) to the web portal by the initiator.

26. The computer program product of claim 23 or 25, the instructions being adapted for receiving a disapproval from at least one of the co-initiators, and re-setting the status data from completion to draft status in response to the receipt of the at least one disapproval, wherein the set of data is private to the initiator as long as it has the draft status and the set of data is private to the initiator and the co-initiators as long as it has the complete status, and wherein the initiator has read and write access right in the draft status and the initiator and the co-initiators have read only access rights in the complete status.

27. A client computer comprising a program component (140) for entering a set of data into a web portal (102, 130) by an initiator, the set of data comprising at least one identifier of at least one co-initiator for sending a message to the at least one co-initiator using the respective identifier in response to the entry of the set of data, and for storing the set of data in a database (110) being coupled to the web portal.

28. A method of collaborative entry of a set of data comprising:
- entering a set of data by an initiator, the set of data comprising at least one identifier of at least one co-initiator,
- receiving a message by the at least one co-initiator, the message comprising a link to the set of data,
- reviewing the set of data by the at least one co-initiator using the link,
- entering an approval to the set of data by the at least on co-initiator in order to enable access to the set of data by an application program (114) after the approval has been received from all co-initiators identified in the set of data.

29. The method of claim 27 or 28, further comprising entering a draft of the set of data and entering completion data for completion of the draft,
wherein the step of sending a message to the at least on co-initiator is performed after the entry of the completion data.

30. The method of claim 27, 28, or 29, further comprising uploading a file (106) by the initiator.

31. The method of claim 28, 29 or 30, further comprising entering a disapproval from at least one of the co-initiators, wherein the set of data is private to the initiator as long as it has a draft status and the set of data is private to the initiator and the co-initiators as long as it has a complete status, and wherein the initiator has read and write access right in the draft status and the initiator and the co-initiators have read only access rights in the complete status.

32. A business method for capturing intellectual property rights to an invention, the method comprising:
- entering an invention disclosure into a web portal (102) by a lead inventor indicating at least one co-inventor.
- online review of the invention disclosure by the at least one co-inventor,
- enabling a workflow for the processing of the invention disclosure after entry of an approval of the invention disclosure by all co-inventors indicated by the lead inventor in the invention disclosure.

33. The business method of claim 32, the invention disclosure having a draft status, a completion status or an approved status, wherein the draft status is assigned to the invention disclosure after the lead inventor's entry of an invention disclosure draft, the draft status is updated to the completion status after the lead inventors entry of completion data for completion of the draft invention disclosure, the completion status is updated to the approved status after entry of an approval by all the co-inventors, and wherein the completion status is re-set to the draft status if at least one of the co-inventors has entered a disapproval.

34. The business method of claim 32 or 33, wherein online access to the invention disclosure by the at least one co-inventor is enabled when the status of the invention disclosure is the completion or approved status.
